# EUROPÄISCHE PATENTANMELDUNG

(11) **EP 4 345 674 A1**
(43) Veröffentlichungstag der Anmeldung: **03.04.2024**
(21) Anmeldenummer: 22199182.1
(22) Anmeldetag: 30.09.2022
(51) Int. Cl.: G06F 30/18, G06F 30/20, H04L 41/14, G06F 111/06

(54) **VERFAHREN FÜR EINE COMPUTER-GESTÜTZTE ERSTELLUNG EINER DEZENTRALEN, ELEKTRISCHEN TOPOLOGIE FÜR EINE MASCHINE**

(71) Anmelder: Murrelektronik GmbH, 71570 Oppenweiler (DE)
(72) Erfinder: Dr.-Ing. ZELLER, Paul, 74223 Flein (DE); PFESTORF, Sebastian, 76137 Karlsruhe (DE)
(74) Vertreter: Goebel, Sebastian

(57) **Zusammenfassung**

Die Erfindung betrifft ein Verfahren (100) für eine computer-gestützte Erstellung einer dezentralen, elektrischen Topologie für eine Maschine (1), insbesondere einer Anlage (1), basierend auf einer Installationsvorgabe (200), umfassend: Ermitteln (101) wenigstens einer Installationsinformation aus der Installationsvorgabe (200), insbesondere aus einem digitalisierten Schalt- und/oder Bauplan, wobei die Installationsvorgabe (200) eine Funktionsfähigkeit der Maschine (1) spezifiziert, wobei vorzugsweise die wenigstens eine Installationsinformation eCAD- und/oder mCAD-Daten umfasst; Simulieren (102) mindestens einer dezentralen, elektrischen Topologie von räumlich dezentral angeordneten, elektrischen Komponenten (4) der Maschine (1), wobei das Simulieren auf Basis der wenigstens einen ermittelten Installationsinformation unter Berücksichtigung der spezifizierten Funktionsfähigkeit der Maschine (1) durchgeführt wird; und Initiieren (103) einer Ausgabe wenigstens einer dezentralen, elektrischen Topologie auf Basis des Simulierens (102).

## Beschreibung

### Technisches Gebiet

Die vorliegende Erfindung betrifft allgemein das Gebiet der Planung, Installation und Einrichtung von elektrischen Maschinen wie elektrischen Anlagen in der Automatisierungstechnik und insbesondere ein Verfahren für eine computer-gestützte Erstellung einer dezentralen, elektrischen Topologie für eine Maschine.

### Hintergrund

Das Planen, Installieren und Einrichten von elektrischer Automatisierungstechnik ist eine komplexe Aufgabe. Dies gilt für zentralisierte Schaltschrankkonzepte ebenso, wie für dezentralisierte Konzepte, in denen Steuerungsmodule direkt an den Anlagen angebracht werden. Die entsprechenden Prozesse werden von unterschiedlichen Personen, wie Anlagen-Planer, Elektro-Planer, Installateur, Anlagenprogrammierer etc. durchgeführt.

Eine Herausforderung dabei ist die Gestaltung der Topologie für die elektrische Installationstechnik. Unter Topologie wird dabei insbesondere die Anordnung der Komponenten, wie Sensoren, Aktoren, Module und Kabel verstanden. Hier kann es für die Umsetzung von dezentralen Konzepten eine komplexe Aufgabe darstellen, die Topologie hinsichtlich der zu verbindenden elektrischen Komponenten, der Anzahl der Module, der Verbindungen zwischen Komponenten mit den einzelnen Modulen und der Module untereinander zu planen.

Es ist daher eine Aufgabe, die der Erfindung zugrunde liegt, eine verbesserte Lösung zur Erstellung einer dezentralen, elektrischen Topologie vorzuschlagen und dabei die oben genannten Nachteile des Standes der Technik zumindest teilweise zu überwinden.

### Zusammenfassung der Erfindung

Die voranstehende Aufgabe wird gelöst durch ein Verfahren, System, Computerprogramm sowie eine Vorrichtung zur Datenverarbeitung gemäß den unabhängigen Patentansprüchen.

Weitere Merkmale und Details der Erfindung ergeben sich aus den jeweiligen Unteransprüchen, der Beschreibung und den Zeichnungen.

Gegenstand der Erfindung ist insbesondere ein Verfahren für eine computer-gestützte Erstellung einer dezentralen, elektrischen Topologie für eine Maschine, insbesondere eine Anlage, basierend auf einer Installationsvorgabe.

Die Maschine kann als wenigstens eine der nachfolgend genannten Maschinen ausgebildet sein:
- Eine Automatisierungsanlage,
- Eine Produktionsanlage,
- Eine Logistikanlage,
- Eine Produktionsstraße,
- Ein Bearbeitungszentrum,
- Ein Industrieroboter,
- Eine Fertigungsanlage,
- Ein Aggregat,
- Ein Elektrogerät.

Insbesondere kann die Maschine dabei als eine Maschine mit modularem Charakter oder auch als mobile oder bewegliche Maschine ausgebildet sein, bei welcher einzelne Teile der Maschine modular gemäß einer Installationsvorgabe installiert werden. Diese Installation erfolgt zumindest teilweise manuell durch einen Benutzer wie einen Werker.

Die elektrischen Komponenten können Verbindungsmodule sein, welche eine dezentrale und modulare Verbindung von Installationselementen ermöglichen. Dezentral kann sich dabei darauf beziehen, dass die Verbindungsmodule zumindest teilweise einen zentralen Schaltschrank ersetzen, indem die Verbindungsmodule zwar jeweils nur einen Teil der Verbindungen für die Maschine bereitstellen, diese Verbindungen aber dezentral im Feld ermöglichen. Bei einer zentralen Topologie, also bspw. einem zentralisierten Schaltschrankkonzept, wird insbesondere von einer Punkt-zu-Punkt-Verbindung gesprochen, d.h. der Startpunkt, die Verbindung und der Endpunkt sind klar definiert. Im Gegensatz dazu ist es bei dezentralen Anwendungen möglich, bzw. kann sogar oftmals notwendig sein, zwischen dem Startpunkt und dem Endpunkt mehrere Komponenten anzuordnen oder zu verbinden. In diesem Fall kann von einer Modul-Switch-Modul-Hub-Punkt-Verbindung gesprochen werden. Grundsätzlich können bei einer Maschine bspw. die folgenden Komponenten vorgesehen sein: Geräte wie Aktoren und/oder Sensoren, die Verbindungsmodule, Installationselemente, bspw. zur Verkabelung.

Vorzugsweise kann das Installationselement ein Kabel und/oder ein Bauteil umfassen, wobei das Kabel mindestens oder genau einen Steckverbinder aufweisen kann, und bevorzugt einseitig konfektioniert sein kann, d.h. einseitig einen weiblichen oder männlichen Stecker und an der anderen Seite ein offenes Ende aufweist. Alternativ, kann das Kabel auch zweiseitig konfektioniert sein, d.h. an jeder Seite weist das Kabel einen weiblichen oder männlichen Stecker auf.

Das Verfahren kann dabei die nachfolgenden Schritte umfassen, welche vorzugsweise nacheinander oder in beliebiger Reihenfolge ausgeführt werden, wobei die Schritte auch wiederholt ausgeführt werden können:
- Ermitteln wenigstens einer Installationsinformation aus der Installationsvorgabe, insbesondere aus einem digitalisierten Schalt- und/oder Bauplan, wobei die Installationsvorgabe eine Funktionsfähigkeit der Maschine, und vorzugsweise eine zentrale Topologie von räumlich zentral angeordneten, elektrischen Komponenten der Maschine, spezifiziert, wobei bevorzugt die wenigstens eine Installationsinformation eCAD- und/oder mCAD-Daten und/oder einen Elektroschaltplan umfasst, wobei besonders bevorzugt die Installationsvorgabe und/oder die wenigstens eine Installationsinformation eine Maschinenkonfiguration, insbesondere Anlagenkonfiguration, umfasst, vorteilhafterweise aus mehreren miteinander verbundenen Komponenten, wie Aktoren, Sensoren, Kabeln und Modulen,
- Simulieren mindestens einer dezentralen, elektrischen Topologie, insbesondere funktionsgewährleistenden Topologie, von räumlich dezentral angeordneten, elektrischen Komponenten der Maschine, bevorzugt durch eine erste Simulation, wobei das Simulieren auf Basis der wenigstens einen ermittelten Installationsinformation unter Berücksichtigung der spezifizierten Funktionsfähigkeit der Maschine durchgeführt werden kann,
- Initiieren einer Ausgabe wenigstens einer dezentralen, elektrischen, vorzugsweise optimierten und/oder automatisch generierten und/oder für die Maschine optimalen, Topologie auf Basis des Simulierens.

Auf diese Weise kann auch ein Unterstützungssystem zur elektrischen Installation, insbesondere Verkabelung von Maschinen, insbesondere Anlagen, mit modularem Charakter bereitgestellt werden. Die Erfindung ermöglicht insbesondere eine einfachere, schnellere und fehlerfreiere Verkabelung. Die Schritte ermöglichen ferner eine Automatisierung des Prozesses der Erstellung der Topologie und führen damit zu einer Unterstützung für den Planer. Ferner kann auf diese Weise die Zuverlässigkeit und Qualität der Planung erhöht und sichergestellt werden. Mittels des optionalen Ermittelns von mCAD-Daten und/oder eCAD-Daten kann dabei ggf. selbständig erkannt werden, welche elektrischen Komponenten miteinander verbunden werden sollten und in welcher Reihenfolge diese Verbindung stattfinden sollte. Auf dieser Grundlage kann die optimierte Topologie mit sehr geringem Zeitaufwand erstellt und vorgeschlagen werden. Ebenso kann die schnelle und fehlerfreie Erstellung einer Stückliste für die verwendete Automatisierungstechnik auf Grundlage der automatisch generierten Topologie möglich sein.

Ein Benutzer kann bspw. ein Installateur und/oder Anlagenmechaniker und/oder Elektriker und/oder Werker und/oder Planer und/oder mechanischer Konstrukteur oder Entwickler und/oder elektrischer Konstrukteur oder Entwickler und/oder SPS-Programmierer und/oder Inbetriebnehmer und/oder Instandhalter und/oder Maschinenführer sein. Es ist möglich, dass der Benutzer das erfindungsgemäße Verfahren dadurch verwendet, dass das Verfahren über einen Computer für den Benutzer bereitgestellt wird. Hierzu kann ein Computerprogramm zumindest teilweise durch den Computer und/oder einen weiteren Computer ausgeführt werden, um die erfindungsgemäßen Verfahrensschritte durchzuführen.

Für die Installation der Maschine können mehrere Installationselemente vorgesehen sein. Diesen Installationselementen kann jeweils ein Identifikator zugeordnet sein, durch welchen die Installationselemente eindeutig identifiziert werden können. Der Identifikator kann entsprechend eine Information sein, welche bspw. digital verarbeitet werden kann. Das jeweilige Installationselement kann den Identifikator dadurch aufweisen, dass ein physisches Identifikationsmittel am Installationselement vorgesehen und/oder angebracht ist. Die Installationselemente können bspw. Kabel oder Bauteile sein, welche ein funktionaler Teil der Maschine sind. Insbesondere werden über die Installationselemente Geräte der Maschine wie Aktoren und/oder Sensoren betrieben, also vorzugsweise angesteuert und/oder ausgelesen. Für den Betrieb der Geräte kann eine Steuerungsvorrichtung wie eine SPS (Speicherprogrammierbare Steuerung) vorgesehen sein, welche über die Installationselemente und Komponenten den elektrischen Betrieb der Geräte durchführen kann. Hierzu kann die Steuerungsvorrichtung mit den Komponenten in elektrischer Verbindung stehen.

Das Simulieren umfasst vorzugsweise ein erstes automatisches Simulieren einer ersten Annäherung an eine optimale Topologie durch Kombination der mCAD und eCAD-Daten. Es ist möglich, dass anschließend eine automatische Optimierung der ersten Simulation anhand von Kriterien zu Präferenzen und technischen Rahmenbedingungen erfolgt. Sodann kann ein automatischer Vergleich aller erstellten Topologien vorgesehen sein. Die Ausgabe kann eine Ausgabe der optimalen Topologie für die jeweilige Anlagenspezifikation umfassen.

Die Topologie kann auf unterschiedlichen Abhängigkeiten beruhen. Es ist möglich, dass die Installationsvorgabe wenigstens eine der Abhängigkeiten aufweist, um darauf basierend die Simulation durchzuführen und/oder die Topologie zu erstellen. Insbesondere können die Abhängigkeiten dabei wenigstens eine der folgenden Angaben aufweisen: eine Anlagenkonfiguration, verfügbare Komponenten wie Aktoren und/oder Sensoren und/oder Module, verfügbare Kabel, verwendete Kommunikationsstandards, elektrische Leistungsabnahme, Bauteilrestriktionen (Leitungslänge, Temperaturverhalten, etc.), Komponenteninformationen über eine gegenseitige Beeinflussung der Komponenten (z. B. gegenseitige thermische und/oder elektromagnetische Beeinflussung, etc.), Kommunikationsgeschwindigkeit, Sicherheitsklassen, Installationstechnologie (MVK, Cube, etc.), Busstandard (ProfiNet, ProfiSave, EtherCAT, EtherNet/IP).

Durch die Simulation und/oder basierend auf der Simulation kann ferner die wenigstens eine dezentrale, elektrische Topologie erstellt werden, bspw. durch wenigstens einen Algorithmus. Anschließend kann die Ausgabe der erstellten Topologie erfolgen. Die Topologie wird bspw. mittels eines Algorithmus erstellt, wobei der Algorithmus ein Regelwerk zur Erstellung einer Topologie abfährt. Der Algorithmus kann ein lernfähiger Algorithmus sein, welcher autonom entscheiden kann, ob das Regelwerk chronologisch abgefahren wird oder ob zumindest eine Regel übersprungen werden soll, beispielsweise wenn festgestellt wird, dass die Regel auf Grund von Details wie dem gegenwärtigen Ausführungskontext und/oder dem durch das Lernen aufgebauten Erfahrungswissen keine Anwendung findet. Hierdurch kann das System deutlich schneller und leistungsfähiger werden.

Zudem ist im Rahmen der Erfindung denkbar, dass der Schritt des Simulierens der mindestens einen dezentralen, elektrischen Topologie die nachfolgenden Schritte umfasst:
- Ermitteln wenigstens einer Maschinenspezifikation aus der Installationsvorgabe,, wobei vorzugsweise die Maschinenspezifikation umfasst: Daten zu einer Art und/oder zu Restriktionen und/oder zu technischen Eigenschaften und/oder zu Platzierungen der elektrischen Komponenten in der Maschine,
- Verknüpfen der ermittelten Maschinenspezifikation mit einer Kommunikationsspezifikation für wenigstens eine Kommunikationsverbindung der elektrischen Komponenten in der Maschine.

Damit kann der Vorteil erzielt werden, dass in Abhängigkeit von der Maschinenspezifikation und insbesondere von der Anlagenkonfiguration eine geeignete Topologie ausgegeben werden kann. Vorteilhafterweise umfasst hierbei das Ermitteln der wenigstens einen Maschinenspezifikation, dass die verfügbaren und notwendigen Anlagenspezifikationsdaten zur Erstellung der Topologie automatisch erkannt werden.

Auch ist es optional denkbar, dass der Schritt des Simulierens der mindestens einen dezentralen, elektrischen Topologie den nachfolgenden Schritt umfasst: Auswerten eines vordefinierten Regelwerks, um die dezentrale, elektrische Topologie anhand des Regelwerks zu erstellen, wobei vorzugsweise das Regelwerk die dezentrale, elektrische Topologie definiert. Das Auswerten des Regelwerks kann dabei automatisch durch einen Algorithmus erfolgen.

Dies hat den Vorteil, dass anhand von vordefinierten Installationsregeln, wie z.B. geringe räumliche Abstände von Modulen zu der Sensor- und Aktorebene, und technischen Bedingungen, wie beispielsweise Installation im Außenbereich, insbesondere im Feld außerhalb des Schaltschranks, für die Erstellung einer geeigneten Topologie eine zielgerichtete und schnellere Auswertung erfolgen kann. Des Weiteren ist es im Rahmen der Erfindung optional möglich, dass die nachfolgenden Schritte durchgeführt werden:
- Bereitstellen von wenigstens einem Bewertungskriterium, welches vorzugsweise wenigstens eine Installationspräferenz und/oder wenigstens ein Optimierungsziel und/oder wenigstens eine Installationsbedingung für eine Installation der dezentralen, elektrischen Topologie umfasst,
- Simulieren mindestens einer weiteren dezentralen, elektrischen Topologie auf Basis, bevorzugt durch eine zweite Simulation, vorzugsweise durch eine Veränderung, der simulierten mindestens einen dezentralen, elektrischen Topologie und auf Basis des wenigstens einen bereitgestellten Bewertungskriteriums, vorzugsweise für die Erstellung einer optimalen dezentralen, elektrischen Topologie, welche wenigstens eine oder höchstens alle des wenigstens einen Bewertungskriteriums erfüllt.

Dies ermöglicht es, dass mit Hilfe der festgelegten Präferenzen und optimierten Installationsziele eine qualitativ umfassendere und bessere dezentrale, elektrische Topologie bewertet und ausgewählt werden kann.

Ferner kann das Initiieren der Ausgabe der wenigstens einen dezentralen, elektrischen Topologie umfassen: Initiieren der Ausgabe wenigstens einer der simulierten weiteren dezentralen, elektrischen Topologie, vorzugsweise der optimalen dezentralen, elektrischen Topologie.

Das wenigstens eine Optimierungsziel kann z. B. wenigstens eine der folgenden Ziele umfassen: Wartungsfreundlichkeit, CO2-Verbrauch, Materialverbrauch, Materialkosten, Arbeitsaufwand, Montagefreundlichkeit, Montageeffizienz, Umsetzungseffizienz, Unabhängigkeit von der Verfügbarkeit von Fachkräften, und dergleichen.

Um einen Widerspruch unterschiedlicher Optimierungsziele aufzulösen, kann eine Gewichtung der Optimierungsziele vorgesehen sein. Durch die Gewichtung der Optimierungsziele lassen sich der Erfüllungsgrad der jeweiligen Optimierung darstellen und ausgeben.

Die Installationspräferenz kann auch als Präferenzkriterium verstanden werden. Bevor eine zweite Simulation durchgeführt wird, können die wenigstens eine Installationspräferenz und/oder das wenigstens eine Optimierungsziel und/oder die wenigstens eine Installationsbedingung in Bedingungen (insbesondere Regeln und technische Bedingungen) umformuliert werden, nach welchen ein Algorithmus die Eignung einer Topologie bewerten und ordnen kann. Anhand dieser Bedingungen kann dann die zweite Simulation durchgeführt werden, welche auf Basis der ersten funktionsgewährleistenden Topologie wenigstens eine mögliche Topologie erstellen kann, die mindestens eine und höchstens alle dieser Bedingungen erfüllt.

Vorzugsweise kann vorgesehen sein, dass das Verfahren nach dem Simulieren der mindestens einen weiteren dezentralen, elektrischen Topologie den nachfolgenden weiteren Schritt umfasst: Analysieren der mindestens einen simulierten, weiteren dezentralen, elektrischen Topologie hinsichtlich einer Erfüllung des wenigstens einen Bewertungskriteriums, wobei vorzugsweise eine Anzahl und Art der erfüllten Bewertungskriterien sowie mögliche Widersprüche berücksichtigt werden, wobei bevorzugt das Analysieren ein Vergleichen der bereits simulierten, weiteren dezentralen, elektrischen Topologie umfasst.

Diese Analyse ermöglicht eine signifikante qualitative Verbesserung der Bewertung der simulierten, weiteren dezentralen, elektrischen Topologie.

Von weiterem Vorteil kann vorgesehen sein, dass der nachfolgende Schritt durchgeführt wird: Durchführen eines Optimierungsvorgangs, bei welchem mindestens zwei Merkmale aus wenigstens zwei der simulierten, weiteren dezentralen, elektrischen Topologien kombiniert werden, um die optimale dezentrale, elektrischen Topologie zu erstellen, vorzugsweise nur unter der Bedingung, dass die Kombination widerspruchsfrei möglich ist.

Dies hat den Vorteil, dass durch die Kombination verschiedener Merkmale ein besserer Optimierungsprozess für die Erstellung einer optimalen, dezentralen, elektrischen Topologie erfolgen kann.

Es kann optional möglich sein, dass der Optimierungsvorgang übergangen wird und wenigstens oder genau eine der simulierten, weiteren dezentralen, elektrischen Topologien als die optimale dezentrale, elektrische Topologie erstellt wird, wenn ein Ergebnis des Analysierens ergibt, dass diese Topologie das wenigstens eine Bewertungskriterium erfüllt, wobei andernfalls der Optimierungsvorgang durchgeführt wird, um die optimale dezentrale, elektrische Topologie zu erstellen.

Es können daher nach der zweiten Simulation die erstellten möglichen Topologien auf die Erfüllung der durch die Bewertungskriterien definierten Bedingungen analysiert werden, auf die Anzahl und Art der erfüllten Bedingungen verglichen und auf mögliche Widersprüche untersucht werden. Die Analyse kann zwei mögliche Ergebnisse liefern, nämlich:
a. Wenigstens eine der simulierten Topologien erfüllt alle der Bedingungen und führt zur Funktionsfähigkeit der Maschine. Es ist kein Optimierungsvorgang nötig. Es kann dann die Ausgabe derart erfolgen, dass mindestens eine der optimalen Topologien ohne eine Optimierung ausgegeben wird,
b. Keine der simulierten Topologien erfüllt alle der Bedingungen. Es kann dann ein Optimierungsvorgang durchgeführt werden, welcher zum Ziel die Kombination von wenigstens zwei Merkmalen aus wenigstens zwei der simulierten Topologien hat, um ein Optimierungsziel zu erreichen. Eine Kombination kann ggf. nur dann durchgeführt werden, falls eine Kombination mindestens zweier Topologien widerspruchsfrei möglich ist und die Kombination wenigstens eine weitere der Bedingung erfüllt als die jeweils nicht-kombinierten Topologien. Es kann dann die Ausgabe derart erfolgen, dass die Topologie ausgegeben wird, die nach der Optimierung die Bedingungen am besten erfüllt. Sollten mehr als eine Topologie die Bedingungen gleich gut erfüllen, so können ggf. alle optimalen Topologien ausgegeben werden.

Dies ermöglicht es, dass eine deutlich verbesserte Flexibilität für den Optimierungsprozess hinsichtlich der zu erstellenden optimalen, dezentralen, elektrischen Topologie gewährleistet wird.

Nach einer weiteren Möglichkeit kann vorgesehen sein, dass das Initiieren der Ausgabe der wenigstens einen dezentralen, elektrischen Topologie eine Ausgabe von mehreren identifizierten optimalen topologischen Anordnungen von räumlich dezentral angeordneten, elektrischen Komponenten umfasst, vorzugsweise dann, wenn diese das wenigstens eine Bewertungskriterium gleich erfüllen.

Dies ermöglicht es, eine schnellere Auswahl der ausgegebenen topologischen Anordnungen zu gewährleisten.

Ferner kann es im Rahmen der Erfindung vorgesehen sein, dass das Verfahren die weiteren nachfolgenden Schritte umfasst:
- Prüfen einer Vollständigkeit und/oder einer Eignung der wenigstens einen ermittelten Installationsinformation, insbesondere der eCAD- und mCAD-Daten, für das Simulieren der mindestens einen dezentralen, elektrischen Topologie; und
- Festlegen einer Simulationsstrategie für das Simulieren der mindestens einen dezentralen, elektrischen Topologie in Abhängigkeit von einem Ergebnis des Prüfens, wobei das Simulieren dann durchgeführt wird, wenn das Prüfen ergibt, dass die wenigstens eine ermittelte Installationsinformation vollständig und/oder geeignet, insbesondere qualitativ ausreichend, ist, wobei vorzugsweise das Simulieren auch dann durchgeführt wird, wenn das Prüfen ergibt, dass mCAD-Daten in der wenigstens einen ermittelten Installationsinformation fehlen, wobei bevorzugt andernfalls eine Benutzereingabe zur Eingabe fehlender Installationsinformationen und/oder eine Handlungsempfehlung initiiert wird.

Dies ermöglicht es, die zuverlässige Erstellung einer optimierten Topologie auch bei nicht vollständigen Daten zu gewährleisten.

Es ist ferner denkbar, dass in dem Fall, dass das Prüfen ergibt, dass ein Teil der wenigstens einen ermittelten Installationsinformation, vorzugsweise die eCAD-Daten, nicht vollständig und/oder qualitativ nicht ausreichend ist, eine Benutzereingabe zur Eingabe des Teils, insbesondere der eCAD-Daten, initiiert wird, um die wenigstens eine ermittelte Installationsinformation in der Art mit dem Teil, insbesondere der eCAD-Daten, anzureichern, dass das Simulieren zur Erstellung der mindestens einen dezentralen, elektrischen Topologie ermöglicht wird. Somit kann in anderen Worten der fehlende Teil automatisiert angereicht werden.

Dies hat den Vorteil, dass die Qualität der Simulation gesteigert wird und eine schnellere Auswahl der optimalen, dezentralen, elektrischen Topologie gewährleistet wird.

Nach einer weiteren Möglichkeit kann vorgesehen sein, dass wenigstens ein Teil der wenigstens einen ermittelten Installationsinformation aus historischen Daten generiert wird, insbesondere in dem Fall, dass das Prüfen ergibt, dass mCAD-Daten in der wenigstens einen ermittelten Installationsinformation fehlen. Damit kann auf Basis bereits gesammelter Daten ein Fehlen von Daten kompensiert werden.

Damit wird es ermöglicht, dass die Qualität des Simulierens deutlich verbessert werden kann.

Ferner kann im Rahmen der Erfindung vorgesehen sein, dass die Ausgabe wenigstens eine der folgenden Angaben umfasst, wobei vorzugsweise die Angaben automatisch generiert werden:
- eine Angabe zu einer Verkabelung der elektrischen Topologie;
- eine Stückliste für die Komponenten der Maschine;
- eine generierte Betriebsmittelkennzeichnung für eine optimierte dezentrale, elektrische Topologie;
- eine Angabe zu Verbindungen der Komponenten miteinander;
- eine Installationsanleitung hinsichtlich einer Reihenfolge der Verbindung der Komponenten miteinander;
- eine Installationsunterstützung eines Werkes bei der Installation der Maschine, vorzugsweise durch wenigstens eine Installationsanweisung; und
- einen elektrischen Anschluss- und/oder Schaltplan.

Dies hat den Vorteil, dass anhand der jeweils ausgegebenen Information bei der Ausgabe eine schnellere Realisierung ermöglicht wird.

Die Ausgabe der wenigstens einen dezentralen elektrischen Topologie kann maschinenlesbar sein oder zumindest einen maschinenlesbaren Teil umfassen. Die maschinenlesbare Ausgabe bzw. der maschinenlesbare Teil kann zumindest eine Steueranweisung und/oder ein Steuersignal umfassen. Die maschinenlesbare Ausgabe bzw. der maschinenlesbare Teil kann zum zumindest teilweisen Steuern eines technischen Systems, beispielsweise der Maschine bzw. Anlage, und/oder zum zumindest teilweisen Steuern eines technischen Prozesses konfiguriert sein.

In einem Aspekt der Erfindung kann vorgesehen sein, dass die Ausgabe zumindest eine Steueranweisung umfasst oder spezifiziert, welche von einer Steuerungsvorrichtung (nachfolgend auch Steuerung oder SPS genannt) maschinenlesbar und/oder ausführbar ist, insbesondere von einer der Maschine bzw. der Anlage zugeordneten Steuerungsvorrichtung.

Hierzu kann die Ausgabe ein sogenanntes SPS-Projekt umfassen bzw. ein solches SPS-Projekt bzw. zumindest Teile davon automatisch erstellen. Das SPS-Projekt kann Informationen umfassen, beispielsweise in Form von einem oder mehreren Objekten, welche zur Erstellung eines Steuerungsprogramms nötig sind. Dies können Programmierbausteine (z.B. Programme, Funktionsbausteine, Funktionen, globale Variablenlisten (GVLs), usw.) und/oder weitere Informationen, die benötigt werden, um das Programm auf einer SPS ausführen zu können, sein (z.B. referenzierte Tasks, Bibliotheksverwalter, Visualisierungen, usw.). Das SPS-Projekt kann in einem maschinenlesbaren Format wie PLCopen XML oder AML in einer oder mehreren entsprechenden Dateien ausgebildet sein.

Die maschinenlesbare Ausgabe kann als Basis für einen Soll/Ist-Abgleich der Topologie in der Anwendung dienen. Beispielsweise kann die Steuerung unter Verwendung der maschinenlesbaren Ausgabe verifizieren, dass in der Maschine bzw. Anlage die programmierten Geräte auch tatsächlich in der entsprechenden Reihenfolge und/oder Form vorhanden sind.

Die maschinenlesbare Ausgabe kann feldbusspezifisch aufbereitet sein und/oder Steuerungs- bzw. SPS-Hersteller-spezifische Daten und/oder Modul- bzw. Modul-Hersteller spezifische Daten und/oder Komponenten, insbesondere Sensor und Aktor, spezifische Daten und/oder Inhalte umfassen, z.B.:
- Profinet: Gerätename und/oder Netzwerkinformationen
- EtherCAT: Gerätename und/oder Netzwerkinformationen und/oder Slot Adresse
- Ethernet/IP: Gerätename und/oder Netzwerkinformationen und/oder Mac-Adresse

Bei sicherheitsrelevanten Anwendungen (sog. Safety-Anwendungen) kann in die maschinenlesbare Ausgabe ein zusätzlicher Safety-Teil integriert sein. Falls beispielsweise zwei SPS-Einheiten vorgesehen sind (eine Safety-SPS und eine Standard-SPS) können zwei getrennte Dateien verwendet werden. Ferner kann für alle Safety-Komponenten eine Prüfsumme in der Datei integriert sein.

Die maschinenlesbare Ausgabe kann ferner einen oder mehrere der nachfolgenden Teile aufweisen, beispielsweise als Sub-Dateien des SPS-Projekts, welche ebenfalls automatisch erstellt werden können:
- GSDML (Gerätespezifische Datei Markup Language) zum automatisierten Geräte/Modul-abhängigen Setzen von für den Betrieb der angeschlossenen Sensoren und/oder Aktoren nötigen Parameter
- GSD (Geräte-Stammdaten-Datei) zur Spezifikation von Geräteeigenschaften wie Protokolle und/oder Kenndaten bzw. ggf. nur die Kurzfassung
- IODD (IO Device Description) zur Definition des spezifischen Device-Application-Tags für jedes IO-Link Device
- ESI/ ENI (EtherCAT Slave Information/ EtherCAT Network Information ) zum automatisierten Geräte/Modul-abhängigen Setzen von für den Betrieb der angeschlossenen Sensoren und/oder Aktoren nötigen Parameter

Die obigen Informationen können, insbesondere in Summe, einen automatischen Start-Up einer Maschine ermöglichen (Plug&Play). Um einen Soll/Ist-Abgleich der Topologie bei der Montage zu gewährleisten, kann es ausreichend sein, das SPS-Projekt ohne GSD und IODD vorzusehen.

Ferner kann die Ausgabe der wenigstens einen dezentralen elektrischen Topologie als Basis für das Erzeugen einer Verwaltungsschale dienen. Eine Verwaltungsschale kann einen Datenpool umfassen, in welchem Hersteller- und Komponenten-spezifische Daten (z.B. PIM, Datenblatt, Handbücher, usw.) mit dem SPS-Projekt assoziiert werden. Dies kann im Betrieb eine weitreichende Datenkonsistenz über den kompletten Produktlebenszyklus ermöglichen bzw. begünstigen und/oder eine spätere systemseitig automatische Identifikation von hardwareseitigen Fehlern, bis hin zur Bestellung von Ersatzteilen, ermöglichen. Beispielsweise kann vorgesehen sein, bei einer Fehlfunktion den Produktionsprozess automatisch anzupassen und/oder nur noch bestimmte Teile und/oder Produkte herzustellen. In anderen Worten kann also eine zustandsabhängige autonome Produktionsplanung und/oder -Steuerung ermöglicht werden. Ebenso können die Installationsanleitungen und/oder Änderungen mit angehängt und somit dezentral verfügbar gemacht werden.

Ein weiterer optionaler Aspekt betrifft die automatische Erstellung der IODD-onboard-Datei, beispielsweise in Form einer Verschmelzung der GSD- und/oder GSDML- sowie der IODD-Dateien. Dies kann das einmalige Aufspielen sowie das Plug-and-Play von Ersatzteilen ermöglichen, ohne dass diese bei der Verwendung von IODD-onboard explizit vorprogrammiert werden müssten. Nach erstmaliger Inbetriebnahme mit IODD onboard können danach die Bauteile auf beliebige Steckplätze gesteckt werden, wobei die SPS sich die Informationen automatisch suchen kann.

Auch ein automatisches Auslassen der BOM (Bill of Materials)-Liste kann vorgesehen sein. Dies kann eine autonome Optimierung nach Materialverfügbarkeit am Markt umfassen, was als Basis für eine autonome lieferdatengerechte Produktionssteuerung und/oder Fertigungsplanung dienen kann. Dies kann zusätzlich oder alternativ ein automatisches Generieren einer kundenspezifischen Preisliste und/oder einer Kreuzliste der BOM nach Anbietern umfassen.

Vorzugsweise kann die Ausgabe eine optimierte Planung umfassen. Bspw. führt die darauf basierende automatisch generierte Stückliste dazu, dass nur die absolut erforderliche Anzahl von Komponenten und Kabeln, insbesondere Steckverbinder, in der notwendigen Menge (z.B. Stückzahl, Kabellänge) verbaut werden. Dies führt dazu, dass es nicht durch eventuelle Fehlplanungen (sowohl Fehlplanungen der Topologie als auch Fehlplanungen der Stückliste) zu Materialverschwendung kommt.

Dies ermöglicht es, dass eine effizientere und schnellere Umsetzung der ausgegebenen Planung gewährleistet wird.

Ebenfalls Gegenstand der Erfindung ist ein System für eine computer-gestützte Erstellung einer dezentralen, elektrischen Topologie für eine Maschine, insbesondere einer Anlage, basierend auf einer Installationsvorgabe, umfassend
- eine Ermittlungsvorrichtung, insbesondere eine Eingabevorrichtung und/oder eine Kamera und/oder ein Datenspeicher, für das Ermitteln, insbesondere Einlesen oder Eingeben, von wenigstens einer Installationsinformation der Installationsvorgabe, insbesondere von mCAD- und/oder eCAD-Daten, sowie
- eine (vorzugsweise erfindungsgemäße) Vorrichtung zur Datenverarbeitung, umfassend Mittel zur Ausführung der Schritte des erfindungsgemäßen Verfahrens.

Damit bringt das erfindungsgemäße System die gleichen Vorteile mit sich, wie sie ausführlich mit Bezug auf ein erfindungsgemäßes Verfahren beschrieben worden sind.

Es kann somit neben einem Verfahren auch ein System zur Erstellung einer Topologie in der dezentralen elektrischen Automatisierungstechnik bereitgestellt werden.

Ebenfalls Gegenstand der Erfindung kann eine Vorrichtung zur Datenverarbeitung sein, umfassend Mittel zur Ausführung der Schritte des erfindungsgemäßen Verfahrens.

Ebenfalls Gegenstand der Erfindung ist ein Computerprogramm, umfassend Befehle, die bei der Ausführung des Programms durch einen Computer, wie die erfindungsgemäße Vorrichtung zur Datenverarbeitung, diesen veranlassen, die Schritte eines erfindungsgemäßen Verfahrens auszuführen. Damit bringt das erfindungsgemäße Computerprogramm die gleichen Vorteile mit sich, wie sie ausführlich mit Bezug auf ein erfindungsgemäßes Verfahren beschrieben worden sind.

### Kurzbeschreibung der Zeichnungen

Zum besseren Verständnis der Offenbarung wird auf die folgenden Zeichnungen verwiesen:
- Fig. 1:: Eine zentrale Verschaltung bei einer Maschine mittels eines Schaltschranks.
- Fig. 2:: Eine dezentrale Verschaltung gemäß Ausführungsbeispielen der Erfindung.
- Fig. 3: Eine schematische Darstellung von Teilen eines Systems gemäß Ausführungsbeispielen der Erfindung.
- Fig. 4: Eine schematische Darstellung von Einzelheiten eines Verfahrens gemäß Ausführungsbeispielen der Erfindung.
- Fig. 5: Eine schematische Darstellung von Schritten eines Verfahrens gemäß Ausführungsbeispielen der Erfindung.

### Beschreibung der Ausführungsbeispiele

Die Planung der Topologie elektrischer, dezentraler Automatisierungstechnik ist in der Durchführung durch einen menschlichen Planer ein zeitaufwendiger Prozess. Nachfolgend werden Ausführungsbeispiele der Erfindung beschrieben, welche durch eine Automatisierung auf Basis von mCAD- und / oder eCAD-Daten die Effizienz in der Planung substanziell zu steigern. Die Automatisierung Erstellung kann dabei zu einer optimalen Gestaltung der elektrischen Topologie führen, wobei die Optimierung der Gestaltung bezüglich unterschiedlichen Optimierungszielen vorgenommen werden kann: Hierbei steht oftmals die Montageeffizienz im Vordergrund. Somit kann die automatisierte Erstellung der elektrischen Topologie auch zu einer höheren Montageeffizienz im Sinne einer optimalen Anordnung der Komponenten führen, als auch zu einer höheren Umsetzungseffizienz, welche durch die Bereitstellung einer fehlerfreien Installationsvorgabe für einen Benutzer, insbesondere Werker realisiert wird.

Die automatisierte Erstellung der elektrischen Topologie stellt ferner sicher, dass Planungsfehler mit hoher Zuverlässigkeit vermieden werden können (bspw. fehlerhafte Verbindungen oder vergessenen Verbindungen). Dadurch ist die Qualität der Planung garantiert und Fehler, die ansonsten ggfs. erst in einem späteren Schritt (wie der Installation oder der Programmierung) erkannt würden, treten gar nicht erst auf.

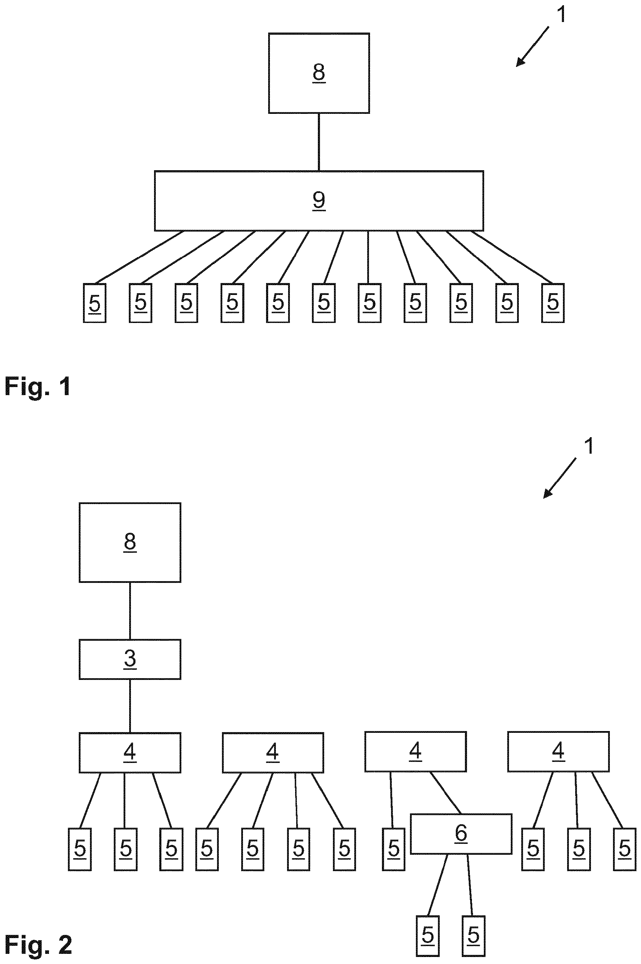

In Fig. 1 ist schematisch eine zentrale Verschaltung mittels eines Schaltschranks 9 dargestellt, um diese einer dezentralen Verschaltung mittels räumlich dezentral angeordneten, elektrischen Komponenten 4 einer Maschine 1 in Fig. 2 gegenüberzustellen. Anstelle einer Verbindung sämtlicher Geräte 5 wie Sensoren und Aktoren unmittelbar mit dem Schaltschrank 9 wie in Fig. 1 dargestellt, können bei der dezentralen Verschaltung in Fig. 2 mehrere Komponenten 4, also insbesondere Verbindungsmodule 4, eingesetzt werden. Diese ermöglichen, wie der Schaltschrank 9, eine Kopplung der Geräte 5 mit einer Steuerungsvorrichtung 8 wie einer SPS. Allerdings können die Verbindungsmodule 4 dezentral und verteilt in der Nähe zu den Geräten 5 vorgesehen sein. Die Verbindungsmodule 4 verschalten somit jeweils die Geräte 5 nur teilweise, wobei die Verbindungsmodule 4 oder beispielsweise ein und/oder mehrere Verbindungsmodule 4 über jeweils einen und/oder mehrere Hubs 6 zusammen die gesamte Verschaltung vornehmen.

Um die Konfiguration und/oder Ansteuerung der Verbindungsmodule 4 zentral zu ermöglichen, kann ein Mastermodul 3 mehreren der einzelnen Verbindungsmodulen 4 vorgeschaltet sein. Ebenfalls ist es möglich, dass eine weitere Untergliederung der Verschaltung mittels wenigstens eines Hubs 6 erfolgt.

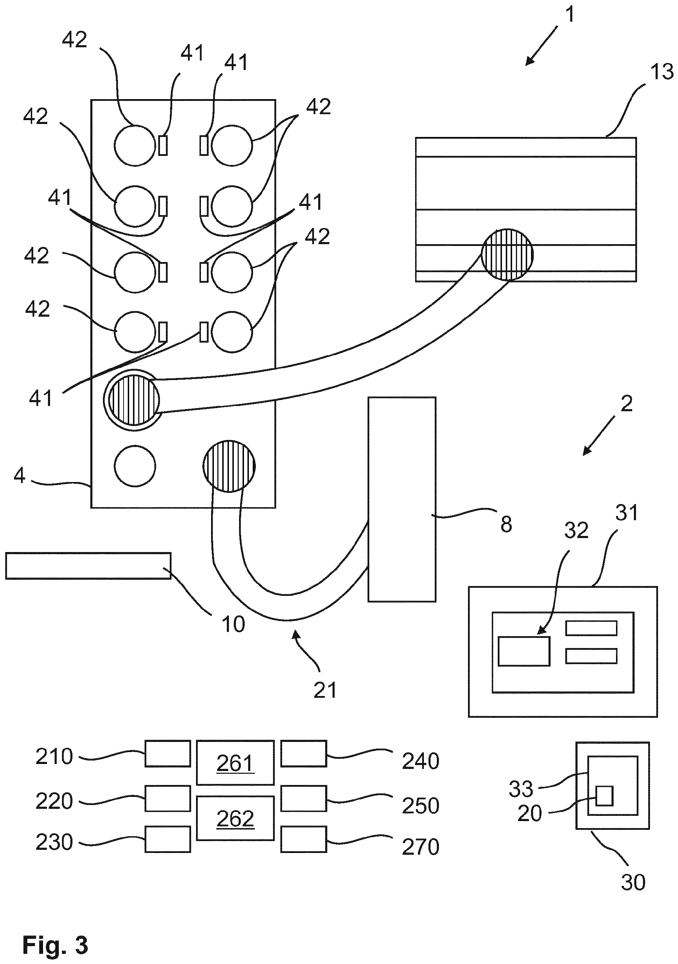

In Fig. 3 sind Teile eines Systems 2 gemäß Ausführungsbeispielen der Erfindung dargestellt. Das System 2 kann eine Vorrichtung 30 zur Datenverarbeitung aufweisen, wobei diese Datenverarbeitungsvorrichtung 30 Mittel zur Ausführung der Schritte eines Verfahren 100 gemäß Ausführungsbeispielen der Erfindung umfassen kann. Ferner kann wenigstens eine elektrische Komponente 4, vorzugsweise in der Form eines Verbindungsmoduls 4 zur Verbindung mit einem Installationselement 10 und weiteren Installationselementen 10, vorgesehen sein. Die Komponente 4 kann für die Verbindung wenigstens eine Anschlussstelle 42 aufweisen. Auch ist ein den jeweiligen Anschlussstellen 42 zugeordnetes Anzeigeelement 41 dargestellt.

Es ist darüber hinaus dargestellt, dass die Komponenten 4 und wenigstens ein Computer 30, 31 (dargestellt mit einer Benutzeroberfläche 32) und/oder eine Steuerungsvorrichtung 8 über ein Bussystem 21 jeweils zur bidirektionalen Kommunikation miteinander verbunden sein können. Die bidirektionale Kommunikation kann auf Basis eines Kommunikationsprotokolls für ein Feldbussystem vorgesehen sein, insbesondere auf Basis eines ProfiNet-, Ethernet/IP- oder 802.3-Standards. Auch kann die bidirektionale Kommunikation kabelgebunden über ein Bussystem 21 oder kabellos mittels Bluetooth und/oder WLAN, auf Basis eines Standards gemäß IEEE 802.11 oder auf Basis eines Mobilfunk-Telekommunikationsstandards ausgeführt sein. Um einen Betrieb der Komponente 4 zu ermöglichen, kann die Komponente 4 ferner mit einer Energieversorgung 13 verbunden sein.

Ferner ist ein Computerprogramm 20 dargestellt, welches Befehle umfasst, die bei der Ausführung des Programms durch einen Computer 30 diesen veranlassen, die Schritte des Verfahrens 100 gemäß Ausführungsbeispielen der Erfindung auszuführen.

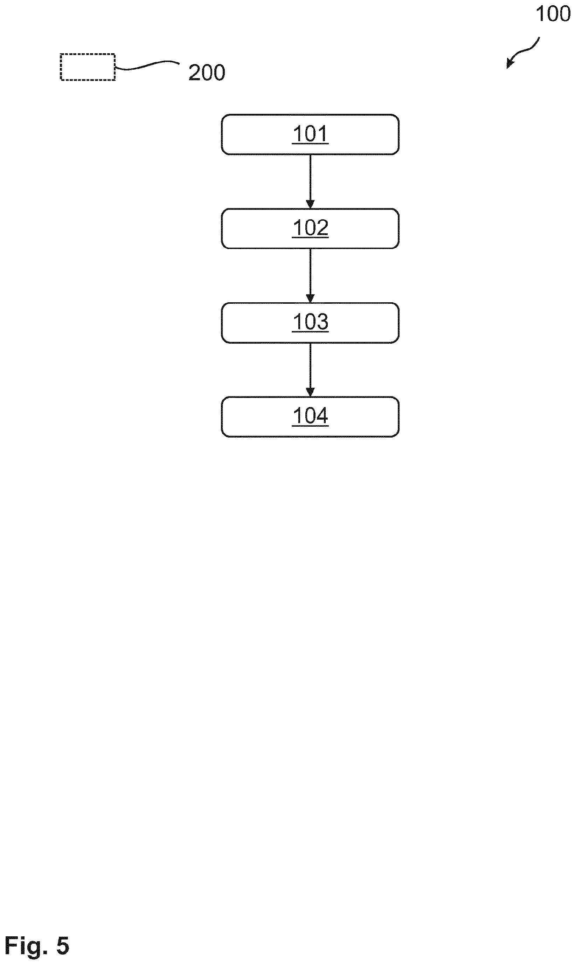

In Fig. 5 ist ein Ausführungsbeispiel eines erfindungsgemäßen Verfahrens 100 für eine computer-gestützte Erstellung einer dezentralen, elektrischen Topologie für eine Maschine 1 basierend auf einer Installationsvorgabe 200 visualisiert. Gemäß einem ersten Verfahrensschritt 101 kann ein Ermitteln wenigstens einer Installationsinformation aus der Installationsvorgabe 200, insbesondere aus einem digitalisierten Schalt- und/oder Bauplan, vorgesehen sein. Die Installationsvorgabe 200 kann eine Funktionsfähigkeit der Maschine 1 und vorzugsweise eine zentrale Topologie von räumlich zentral angeordneten, elektrischen Komponenten der Maschine spezifizieren, wobei vorzugsweise die wenigstens eine Installationsinformation eCAD- und/oder mCAD-Daten umfasst. In anderen Worten kann in den eCAD- und/oder mCAD-Daten eine Topologie, vorzugsweise zentrale Topologie, der Maschine definiert sein. Diese kann z. B. Betriebsmittelkennzeichnungen und/oder Anschlussspezifikationen und/oder dergleichen umfassen. Entsprechend wird auf diese Weise auch eine Funktionalität spezifiziert.

Ferner kann gemäß einem zweiten Verfahrensschritt 102 ein Simulieren mindestens einer dezentralen, elektrischen Topologie von räumlich dezentral angeordneten, elektrischen Komponenten 4 der Maschine 1 durchgeführt werden, wobei das Simulieren auf Basis der wenigstens einen ermittelten Installationsinformation unter Berücksichtigung der spezifizierten Funktionsfähigkeit der Maschine 1 durchgeführt wird. In einem dritten Verfahrensschritt 103 erfolgt eine Ausgabe wenigstens einer dezentralen, elektrischen Topologie auf Basis des Simulierens 102, insbesondere eine Ausgabe wenigstens einer optimierten, dezentralen, elektrischen Topologie auf Basis des Simulierens 102.

Der Schritt des Simulierens 102 der mindestens einen dezentralen, elektrischen Topologie kann ferner ein Ermitteln wenigstens einer Maschinenspezifikation aus der Installationsvorgabe 200 umfassen. Ebenfalls kann ein Verknüpfen der ermittelten Maschinenspezifikation mit einer Kommunikationsspezifikation für wenigstens eine Kommunikationsverbindung der elektrischen Komponenten 4 in der Maschine 1 vorgesehen sein. Auch ist es möglich, dass der Schritt des Simulierens 102 der mindestens einen dezentralen, elektrischen Topologie ein Auswerten eines vordefinierten Regelwerks umfasst, um die dezentrale, elektrische Topologie anhand des Regelwerks zu erstellen, wobei vorzugsweise das Regelwerk die dezentrale, elektrische Topologie definiert.

Um die simulierten Topologien an die Anforderungen der Maschine 1 auszurichten, kann ferner wenigstens ein Bewertungskriterium bereitgestellt werden. Dieses kann in anderen Worten wenigstens eine Rahmenbedingung für die Simulation umfassen, wie z. B. eine Installationspräferenz und/oder wenigstens ein Optimierungsziel und/oder wenigstens eine Installationsbedingung für eine Installation der dezentralen, elektrischen Topologie umfassen. Anschließend kann ein zweites Simulieren mindestens einer weiteren dezentralen, elektrischen Topologie auf Basis, vorzugsweise durch eine Veränderung, der simulierten mindestens einen dezentralen, elektrischen Topologie (der ersten Simulation) und auf Basis des wenigstens einen bereitgestellten Bewertungskriteriums erfolgen.

Darüber hinaus ist es möglich, dass eine Analyse der mindestens einen simulierten, weiteren dezentralen, elektrischen Topologie hinsichtlich einer Erfüllung des wenigstens einen Bewertungskriteriums erfolgt. Anschließend kann ein Optimierungsvorgang erfolgen, bei welchem mindestens zwei Merkmale aus wenigstens zwei der simulierten, weiteren dezentralen, elektrischen Topologien kombiniert werden, um die optimale dezentrale, elektrischen Topologie zu erstellen.

Es ist auch möglich, dass der Optimierungsvorgang übergangen wird und wenigstens oder genau eine der simulierten, weiteren dezentralen, elektrischen Topologien als die optimale dezentrale, elektrische Topologie erstellt wird, wenn ein Ergebnis des Analysierens ergibt, dass diese Topologie das wenigstens eine Bewertungskriterium erfüllt, wobei andernfalls der Optimierungsvorgang durchgeführt wird, um die optimale dezentrale, elektrische Topologie zu erstellen. Es kann außerdem eine Prüfung auf Vollständigkeit und/oder Eignung der wenigstens einen ermittelten Installationsinformation, insbesondere der eCAD- und mCAD-Daten, für das Simulieren 102 der mindestens einen dezentralen, elektrischen Topologie vorgesehen sein. Abhängig von einem Ergebnis des Prüfens kann sodann eine Simulationsstrategie für das Simulieren 102 der mindestens einen dezentralen, elektrischen Topologie festgelegt werden. Dabei kann das Simulieren 102 dann durchgeführt werden, wenn das Prüfen ergibt, dass die wenigstens eine ermittelte Installationsinformation vollständig und/oder geeignet, insbesondere qualitativ ausreichend, ist, wobei vorzugsweise das Simulieren 102 auch dann durchgeführt wird, wenn das Prüfen ergibt, dass mCAD-Daten in der wenigstens einen ermittelten Installationsinformation fehlen, wobei bevorzugt andernfalls eine Benutzereingabe zur Eingabe fehlender Installationsinformationen initiiert wird. Der Simulationsansatz kann somit auch die Möglichkeit eröffnen, bei fehlenden oder fehlerhaften mCAD-Daten eine erste Näherung der Topologie zu erstellen. Dabei kann die Simulation ggf. bei fehlerhaften mCAD-Daten auf einen Datenbestand einer Datenquelle zugreifen, z.B. auf historischen Daten, sodass das computerimplementierte System basierend auf dem Datenbestand die mCAD-Daten vervollständigen kann. Bei fehlenden mCAD-Daten kann die Simulation sich ferner der im eCAD hinterlegten elektrischen Betriebsmittelkennzeichnung bedienen, welche für jedes Bauteil Orts- und Betriebsmittelinformationen enthält.

In Fig. 3 ist ein Ausführungsbeispiel für ein System 2 für eine computer-gestützte Erstellung einer dezentralen, elektrischen Topologie für eine Maschine 1, insbesondere einer Anlage 1, basierend auf einer Installationsvorgabe 200, gezeigt. Es kann eine Ermittlungsvorrichtung 210 für das Ermitteln von wenigstens einer Installationsinformation der Installationsvorgabe 200 vorgesehen sein. Auch kann eine Vorrichtung 30 zur Datenverarbeitung Teil des Systems 2 sein. Die Ermittlungsvorrichtung 210 kann dazu ausgeführt sein, die ausführenden Komponenten 4 (also insbesondere Art, Restriktionen, technische Eigenschaften, Platzierung etc.), vorzugsweise mCAD-Daten, und/oder die elektrischen / kommunikativen Verbindungen (elektrischer Anschlussplan), vorzugsweise eCAD-Daten, und/oder die vorhandenen Komponenten 4 zu ermitteln bzw. einzulesen.

Die Ermittlungsvorrichtung 210 kann die zur Erstellung erforderlichen Daten, wie mCAD- und/oder eCAD-Daten, ermitteln. Dies kann bedeuten, dass die für die Erstellung der Topologie relevanten Daten in das System importiert, kombiniert und verarbeitet werden. Ferner kann eine Verknüpfungseinheit 220 vorgesehen sein, welche die Daten verknüpft und überprüft, ob alle notwendigen Daten vorhanden sind. Eine ebenfalls optional vorgesehene Entscheidungseinheit 230 kann anschließend entscheiden, welcher Handlungsstrang durchgeführt wird. Dabei können vorteilhafterweise folgende Handlungsstränge zur Auswahl stehen:
a) alle Daten sind vorhanden und korrekt, das System 2 simuliert die erste Topologie,
b) es liegen teilweise fehlende und/oder falsche mCAD-Daten vor, wobei eine Anreicherungseinheit 240, welche mit dem Benutzer kommunizieren kann oder das System 2 mit Daten so weit anreichern kann, dass die Maschine 1 funktionsfähig wird, wobei das System 2 diese Daten aus einem Datenspeicher 33, welcher z.B. historische Daten enthält, anreichern und auf Tauglichkeit prüfen kann, und/oder
c) es wird bei fehlenden mCAD-Daten auf Basis der im eCAD (zentrale Darstellung) enthaltenden Betriebsmittelkennzeichnungen iterativ eine dezentrale Näherung der mCAD-Daten erstellt.

Darüber hinaus kann das System 2 eine erste Simulationseinheit 261 aufweisen, welche eine erste Topologie in einer ersten Simulation bzw. ersten Iteration simuliert, die die Funktionsfähigkeit der Maschine prinzipiell gewährleistet und ausgibt, wobei während der Simulation ein Algorithmus ein Regelwerk chronologisch abfahren kann. Ferner kann ein Präferenzsystem 250 vorgesehen sein, welche die vom Benutzer gewichten Präferenzen (Optimierungsziele) in technische Rahmenbedingungen übersetzt. Auch kann eine zweite Simulationseinheit 262 vorgesehen sein, welche die zur Erfüllung der technischen Rahmenbedingungen notwendigen Änderungen der ersten Topologie schrittweise simuliert. Das Ergebnis können dann auch mehrere Topologien sein, welche die unterschiedlichen technischen Rahmenbedingungen ggf. teilweise erfüllen. Eine Ausgabeeinheit 270 kann anschließend die finalen Topologien, die dem gewichteten Präferenzsystem 250 am besten entsprechen, ausgeben.

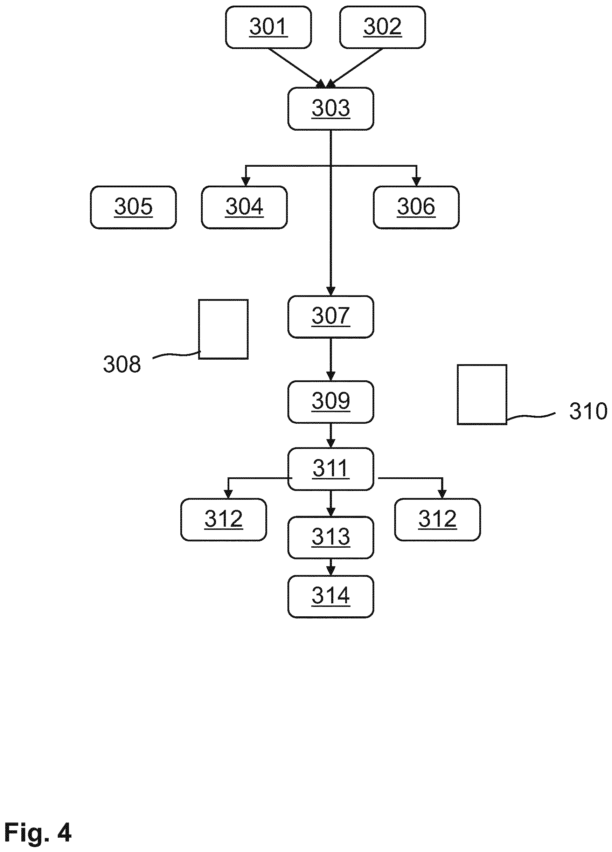

In Fig. 4 ist ein Ausführungsbeispiel der Erfindung mit weiteren Einzelheiten gezeigt. Gemäß den Verfahrensschritten 301, 302 werden zunächst die zur Erstellung der Topologie die relevanten MCAD und ECAD-Datensätze in das (in Fig. 3 dargestellte) System 2 importiert, kombiniert und verarbeitet. Anschließend wird gemäß 303 überprüft, ob alle notwendigen Informationen vorhanden sind und ob sich die Informationen zur Erstellung einer Topologie eignen. Gemäß 304 kann die Prüfung drei mögliche Ergebnisse liefern. In einem ersten Ergebnis 304 sind die Daten vollständig und qualitativ ausreichend. Es kann sodann die erste Simulation einer Topologie erstellt werden. Gemäß einem zweiten Ergebnis 305 sind die ECAD-Daten nicht vollständig oder die Qualität der Daten ist nicht ausreichend hoch. Der Benutzer kann dann aufgefordert werden, eine entsprechende Menge an ECAD-Daten einzugeben, die zur ausreichenden Anreicherung des Datensatzes zur Simulation der Topologie geeignet ist. Daraufhin kann eine erste Simulation der Topologie durchgeführt werden. Ein drittes Ergebnis 306 indiziert, dass die relevanten MCAD-Daten fehlen. Es kann dann eine erste Iteration durchgeführt werden, da eine erste Simulation der Topologie möglich ist, wenn wenigstens die ECAD-Daten vollständig vorhanden sind. Das Vorhandensein der vollständigen MCAD-Daten ist nicht zwingend notwendig zur Simulation einer ersten Topologie. Gemäß 307 wird nach der Prüfung durch die Verknüpfung von Daten zu der Art, Restriktionen, technischen Eigenschaften und der Platzierungen der Komponenten in der Maschine (MCAD) mit Daten zu ihren kommunikativen Verbindungen (ECAD) im System 2 eine erste Topologie simuliert, die die Funktionsfähigkeit der Anlage prinzipiell gewährleistet, wobei während der Simulation ein Algorithmus ein Regelwerk 308 chronologisch abfährt. Das Regelwerk 308 wird zuvor in das System 2 eingegeben. Bevor die zweite Simulation durchgeführt wird, können bei 309 zuvor definierte Präferenzkriterien und Optimierungsziele in Regeln und technische Bedingungen 310 umformuliert werden, nach welchen ein Algorithmus die Eignung einer Topologie bewerten und ordnen kann. Die Regeln des Regelwerks umfassen dabei beispielweise Bedingungen oder Ziele wie Wartungsfreundlichkeit, CO2-Verbrauch, Materialverbrauch, Materialverfügbarkeit, Materialkosten, Arbeitsaufwand, Montagefreundlichkeit, Montageeffizienz, Umsetzungseffizienz, Unabhängigkeit von der Verfügbarkeit von Fachkräften, und dergleichen. Anhand dieser definierten Bedingungen 310 kann bei 311 eine zweite Simulation durchgeführt werden, welche auf Basis der ersten funktionsgewährleistenden Topologie aus der ersten Simulation wenigstens eine mögliche Topologie erstellt, die mindestens eine und höchstens alle Bedingungen 310 erfüllt. Die erstellten Topologien können dann bei 312 ausgegeben werden. Optional können bei 313 nach dieser zweiten Simulation die erstellten möglichen Topologien auf die Erfüllung der Bedingungen 310 hin analysiert werden, auf die Anzahl und Art der erfüllten Bedingungen verglichen und auf mögliche Widersprüche untersucht werden. Die Analyse kann zwei mögliche Ergebnisse liefern: Das erste Ergebnis kann sein, dass wenigstens eine der simulierten Topologien alle definierten Bedingungen 310 erfüllt und zur Funktionsfähigkeit der Maschine 1 führt. Es ist somit kein Optimierungsvorgang nötig. Das zweite Ergebnis kann sein, dass keine der simulierten Topologien alle definierten Bedingungen 310 erfüllt. Es wird ein Optimierungsvorgang durchgeführt, welcher die Kombination von wenigstens zwei Merkmalen aus wenigstens zwei der in Schritt 311 simulierten Topologien zum Ziel hat, um ein Optimierungsziel zu erreichen. Eine Kombination wird nur dann durchgeführt, falls eine Kombination mindestens zweier Topologien aus Schritt 311 widerspruchsfrei möglich ist und die Kombination wenigstens eine weitere Bedingung 310 erfüllt als die jeweils nicht-kombinierten Topologien aus 311. Die Ausgabe kann somit zwei mögliche Ergebnisse liefern: Trifft das erste Ergebnis zu, so wird mindestens einer der optimalen Topologien ohne eine Optimierung ausgegeben. Trifft das zweite Ergebnis zu, so wird die Topologie ausgegeben, die nach der Optimierung bei 309 definierten Bedingungen 310 am besten erfüllt. Sollten mehr als eine Topologie die Bedingungen gleich gut erfüllen, so werden alle optimalen Topologien ausgegeben.

Obwohl einige Aspekte im Zusammenhang mit einer Vorrichtung beschrieben wurden, ist es klar, dass diese Aspekte auch eine Beschreibung des entsprechenden Verfahrens darstellen, wobei ein Element oder eine Vorrichtung einem Verfahrensschritt oder einem Merkmal eines Verfahrensschritts entspricht. Analog dazu stellen Aspekte, die im Zusammenhang mit einem Verfahrensschritt beschrieben werden, auch eine Beschreibung eines entsprechenden Blocks oder Elements oder Merkmals eines entsprechenden Geräts dar.

Ausführungsformen der Erfindung können auf einem Computersystem implementiert werden. Bei dem Computersystem kann es sich um ein lokales Computergerät (z. B. Personal Computer, Laptop, Tablet-Computer oder Mobiltelefon) mit einem oder mehreren Prozessoren und einem oder mehreren Speichergeräten handeln oder um ein verteiltes Computersystem (z. B. ein Cloud-Computersystem mit einem oder mehreren Prozessoren und einem oder mehreren Speichergeräten, die an verschiedenen Orten verteilt sind, z. B. bei einem lokalen Client und/oder einer oder mehreren entfernten Serverfarmen und/oder Datenzentren). Das Computersystem kann jede beliebige Schaltung oder Kombination von Schaltungen umfassen. In einer Ausführungsform kann das Computersystem einen oder mehrere Prozessoren beliebiger Art umfassen. Der hier verwendete Begriff "Prozessor" kann jede Art von Rechenschaltung bezeichnen, z. B. einen Mikroprozessor, einen Mikrocontroller, einen CISC-Mikroprozessor (Complex Instruction Set Computing), einen RISC-Mikroprozessor (Reduced Instruction Set Computing), einen VLIW-Mikroprozessor (Very Long Instruction Word), einen Grafikprozessor, einen digitalen Signalprozessor (DSP), einen Mehrkernprozessor, ein FPGA (Field Programmable Gate Array) oder jede andere Art von Prozessor oder Verarbeitungsschaltung. Andere Arten von Schaltkreisen, die im Computersystem enthalten sein können, können ein kundenspezifischer Schaltkreis, ein anwendungsspezifischer integrierter Schaltkreis (ASIC) oder ähnliches sein, wie z. B. ein oder mehrere Schaltkreise (z. B. ein Kommunikationsschaltkreis) zur Verwendung in drahtlosen Geräten wie Mobiltelefonen, Tablet-Computern, Laptop-Computern, Zwei-Wege-Funkgeräten und ähnlichen elektronischen Systemen. Das Computersystem kann eine oder mehrere Speichervorrichtungen enthalten, die ein oder mehrere für die jeweilige Anwendung geeignete Speicherelemente umfassen können, wie z. B. einen Hauptspeicher in Form eines Direktzugriffsspeichers (RAM), eine oder mehrere Festplatten und/oder ein oder mehrere Laufwerke, die Wechseldatenträger wie Compact Disks (CD), Flash-Speicherkarten, digitale Videodisks (DVD) und dergleichen verarbeiten. Das Computersystem kann auch ein Anzeigegerät, einen oder mehrere Lautsprecher und eine Tastatur und/oder ein Steuergerät enthalten, das eine Maus, einen Trackball, einen Touchscreen, ein Spracherkennungsgerät oder ein anderes Gerät umfassen kann, das es einem Systembenutzer ermöglicht, Informationen in das Computersystem einzugeben und Informationen von ihm zu empfangen.

Einige oder alle Verfahrensschritte können von einem Hardware-Gerät (oder unter Verwendung eines solchen) ausgeführt werden, wie z. B. einem Prozessor, einem Mikroprozessor, einem programmierbaren Computer oder einer elektronischen Schaltung. In einigen Ausführungsformen können einige oder mehrere der wichtigsten Verfahrensschritte von einem solchen Gerät ausgeführt werden.

Abhängig von bestimmten Implementierungsanforderungen können Ausführungsformen der Erfindung in Hardware oder in Software implementiert werden. Die Implementierung kann unter Verwendung eines nicht-übertragbaren Speichermediums wie eines digitalen Speichermediums, beispielsweise einer Diskette, einer DVD, einer Blu-Ray, einer CD, eines ROM, eines PROM, eines EPROM, eines EEPROM oder eines FLASH-Speichers erfolgen, auf dem elektronisch lesbare Steuersignale gespeichert sind, die mit einem programmierbaren Computersystem zusammenwirken (oder zusammenwirken können), so dass das jeweilige Verfahren durchgeführt wird. Daher kann das digitale Speichermedium computerlesbar sein.

Einige Ausführungsformen der Erfindung umfassen einen Datenträger mit elektronisch lesbaren Steuersignalen, die in der Lage sind, mit einem programmierbaren Computersystem zusammenzuarbeiten, so dass eines der hier beschriebenen Verfahren durchgeführt wird.

Im Allgemeinen können Ausführungsformen der vorliegenden Erfindung als Computerprogrammprodukt mit einem Programmcode implementiert werden, wobei der Programmcode zur Durchführung eines der Verfahren dient, wenn das Computerprogrammprodukt auf einem Computer läuft. Der Programmcode kann zum Beispiel auf einem maschinenlesbaren Träger gespeichert sein.

Andere Ausführungsformen umfassen das Computerprogramm zur Durchführung eines der hier beschriebenen Verfahren, das auf einem maschinenlesbaren Träger gespeichert ist.

Mit anderen Worten, eine Ausführungsform der vorliegenden Erfindung ist daher ein Computerprogramm mit einem Programmcode zur Durchführung eines der hierin beschriebenen Verfahren, wenn das Computerprogramm auf einem Computer läuft.

Eine weitere Ausführungsform der vorliegenden Erfindung ist daher ein Speichermedium (oder ein Datenträger oder ein computerlesbares Medium), auf dem das Computerprogramm zur Durchführung eines der hierin beschriebenen Verfahren gespeichert ist, wenn es von einem Prozessor ausgeführt wird. Der Datenträger, das digitale Speichermedium oder das aufgezeichnete Medium sind typischerweise greifbar und/oder nicht-übertragbar. Eine weitere Ausführungsform der vorliegenden Erfindung ist ein Gerät, wie hierin beschrieben, mit einem Prozessor und dem Speichermedium.

Eine weitere Ausführungsform der Erfindung ist daher ein Datenstrom oder eine Folge von Signalen, die das Computerprogramm zur Durchführung eines der hierin beschriebenen Verfahren darstellen. Der Datenstrom bzw. die Signalfolge kann beispielsweise so ausgestaltet sein, dass er bzw. sie über eine Datenkommunikationsverbindung, z.B. über das Internet, übertragen werden kann.

Eine weitere Ausführungsform umfasst ein Verarbeitungsmittel, z. B. einen Computer oder ein programmierbares Logikgerät, das so konfiguriert oder angepasst ist, dass es eines der hierin beschriebenen Verfahren durchführen kann.

Eine weitere Ausführungsform umfasst einen Computer, auf dem das Computerprogramm zur Durchführung eines der hierin beschriebenen Verfahren installiert ist.

Eine weitere Ausführungsform der Erfindung umfasst eine Vorrichtung oder ein System, die bzw. das so konfiguriert ist, dass sie bzw. es ein Computerprogramm zur Durchführung eines der hierin beschriebenen Verfahren an einen Empfänger überträgt (z. B. auf elektronischem oder optischem Weg). Bei dem Empfänger kann es sich beispielsweise um einen Computer, ein mobiles Gerät, ein Speichergerät oder dergleichen handeln. Die Vorrichtung oder das System kann zum Beispiel einen Dateiserver zur Übertragung des Computerprogramms an den Empfänger umfassen.

In einigen Ausführungsformen kann eine programmierbare Logikvorrichtung (z. B. ein feldprogrammierbares Gate-Array) verwendet werden, um einige oder alle Funktionen der hier beschriebenen Verfahren auszuführen. In einigen Ausführungsformen kann ein feldprogrammierbares Gate-Array mit einem Mikroprozessor zusammenarbeiten, um eines der hier beschriebenen Verfahren durchzuführen. Im Allgemeinen werden die Verfahren vorzugsweise von einem beliebigen Hardware-Gerät durchgeführt.

### Liste der Bezugszeichen

- 1: Maschine, Anlage
- 2: System
- 3: Mastermodul
- 4: Modul, Komponente, Verbindungsmodul
- 5: Geräte, Sensor, Aktor
- 6: Hub
- 8: Steuerungsvorrichtung, SPS
- 9: Schaltschrank

- 13: Energieversorgung

- 20: Computerprogramm
- 21: Bussystem

- 30: Vorrichtung
- 31: Computer
- 32: Benutzeroberfläche
- 33: Datenspeicher

- 41: Anzeigeelement
- 42: Anschlussstelle, Steckplatz

- 100: Verfahren
- 101: erster Verfahrensschritt
- 102: zweiter Verfahrensschritt
- 103: dritter Verfahrensschritt
- 104: vierter Verfahrensschritt

- 200: Installationsvorgabe
- 210: Ermittlungsvorrichtung

- 220: Verknüpfungseinheit
- 230: Entscheidungseinheit
- 240: Anreicherungseinheit
- 250: Präferenzsystem

- 261: erste Simulationseinheit
- 262: zweite Simulationseinheit
- 270: Ausgabeeinheit

- 301: weiterer Verfahrensschritt: Ermittlung mCAD-Daten
- 302: weiterer Verfahrensschritt: Ermittlung eCAD-Daten
- 303: weiterer Verfahrensschritt: Prüfung
- 304: weiterer Verfahrensschritt: Erhalt erstes Ergebnis
- 305: weiterer Verfahrensschritt: Erhalt zweites Ergebnis
- 306: weiterer Verfahrensschritt: Erhalt drittes Ergebnis
- 307: weiterer Verfahrensschritt: Erhalt erste Simulation
- 308: weiterer Verfahrensschritt: Bereitstellung Regelwerke
- 309: weiterer Verfahrensschritt: Optimierung
- 310: weiterer Verfahrensschritt: Bereitstellung Rahmenbedingungen
- 311: weiterer Verfahrensschritt: zweite Simulation
- 312: weiterer Verfahrensschritt: Bereitstellung Topologie
- 313: weiterer Verfahrensschritt: Analyse
- 314: weiterer Verfahrensschritt: Weitere Bereitstellung Topologie

## Patentansprüche

1. Ein Verfahren (100) für eine computer-gestützte Erstellung einer dezentralen, elektrischen Topologie für eine Maschine (1), insbesondere eine Anlage (1), basierend auf einer Installationsvorgabe (200), umfassend:
Ermitteln (101) wenigstens einer Installationsinformation aus der Installationsvorgabe (200), insbesondere aus einem digitalisierten Schalt- und/oder Bauplan, wobei die Installationsvorgabe (200) eine Funktionsfähigkeit der Maschine (1) spezifiziert, wobei vorzugsweise die wenigstens eine Installationsinformation eCAD- und/oder mCAD-Daten umfasst;
Simulieren (102) mindestens einer dezentralen, elektrischen Topologie von räumlich dezentral angeordneten, elektrischen Komponenten (4) der Maschine (1), wobei das Simulieren auf Basis der wenigstens einen ermittelten Installationsinformation unter Berücksichtigung der spezifizierten Funktionsfähigkeit der Maschine (1) durchgeführt wird; und
Initiieren (103) einer Ausgabe wenigstens einer dezentralen, elektrischen Topologie auf Basis des Simulierens (102).

2. Das Verfahren (100) nach Anspruch 1, wobei der Schritt des Simulierens (102) der mindestens einen dezentralen, elektrischen Topologie die nachfolgenden Schritte umfasst:
Ermitteln wenigstens einer Maschinenspezifikation aus der Installationsvorgabe (200), wobei vorzugsweise die Maschinenspezifikation umfasst: Daten zu einer Art und/oder zu Restriktionen und/oder zu technischen Eigenschaften und/oder zu Platzierungen der elektrischen Komponenten in der Maschine (1); und
Verknüpfen der ermittelten Maschinenspezifikation mit einer Kommunikationsspezifikation für wenigstens eine Kommunikationsverbindung der elektrischen Komponenten (4) in der Maschine (1).

3. Das Verfahren (100) nach einem der vorhergehenden Ansprüche, wobei der Schritt des Simulierens (102) der mindestens einen dezentralen, elektrischen Topologie den nachfolgenden Schritt umfasst:
Auswerten eines vordefinierten Regelwerks, um die dezentrale, elektrische Topologie anhand des Regelwerks zu erstellen, wobei vorzugsweise das Regelwerk die dezentrale, elektrische Topologie definiert.

4. Das Verfahren (100) nach einem der vorhergehenden Ansprüche, wobei die nachfolgenden Schritte durchgeführt werden:
Bereitstellen von wenigstens einem Bewertungskriterium, welches vorzugsweise wenigstens eine Installationspräferenz und/oder wenigstens ein Optimierungsziel und/oder wenigstens eine Installationsbedingung für eine Installation der dezentralen, elektrischen Topologie umfasst; und
Simulieren mindestens einer weiteren dezentralen, elektrischen Topologie auf Basis, vorzugsweise durch eine Veränderung, der simulierten mindestens einen dezentralen, elektrischen Topologie und auf Basis des wenigstens einen bereitgestellten Bewertungskriteriums, vorzugsweise für die Erstellung einer optimalen dezentralen, elektrischen Topologie, welche wenigstens eine oder höchstens alle des wenigstens einen Bewertungskriteriums erfüllt;
wobei das Initiieren der Ausgabe der wenigstens einen dezentralen, elektrischen Topologie umfasst:
Initiieren der Ausgabe wenigstens einer der simulierten weiteren dezentralen, elektrischen Topologie, vorzugsweise der optimalen dezentralen, elektrischen Topologie.

5. Das Verfahren (100) nach Anspruch 4, wobei das Verfahren (100) nach dem Simulieren der mindestens einen weiteren dezentralen, elektrischen Topologie den nachfolgenden weiteren Schritt umfasst:
Analysieren der mindestens einen simulierten, weiteren dezentralen, elektrischen Topologie hinsichtlich einer Erfüllung des wenigstens einen Bewertungskriteriums, wobei vorzugsweise eine Anzahl und Art der erfüllten Bewertungskriterien sowie mögliche Widersprüche berücksichtigt werden, wobei bevorzugt das Analysieren ein Vergleichen der bereits simulierten, weiteren dezentralen, elektrischen Topologie umfasst.

6. Das Verfahren (100) nach Anspruch 5, wobei der nachfolgende Schritt durchgeführt wird:
Durchführen eines Optimierungsvorgangs, bei welchem mindestens zwei Merkmale aus wenigstens zwei der simulierten, weiteren dezentralen, elektrischen Topologien kombiniert werden, um die optimale dezentrale, elektrischen Topologie zu erstellen, vorzugsweise nur unter der Bedingung, dass die Kombination widerspruchsfrei möglich ist.

7. Das Verfahren (100) nach Anspruch 6, wobei der Optimierungsvorgang übergangen wird und wenigstens oder genau eine der simulierten, weiteren dezentralen, elektrischen Topologien als die optimale dezentrale, elektrische Topologie erstellt wird, wenn ein Ergebnis des Analysierens ergibt, dass diese Topologie das wenigstens eine Bewertungskriterium erfüllt, wobei andernfalls der Optimierungsvorgang durchgeführt wird, um die optimale dezentrale, elektrische Topologie zu erstellen.

8. Das Verfahren (100) nach einem der Ansprüche 4 bis 7, wobei das Initiieren der Ausgabe der wenigstens einen dezentralen, elektrischen Topologie eine Ausgabe von mehreren identifizierten optimalen topologischen Anordnungen von räumlich dezentral angeordneten, elektrischen Komponenten umfasst, vorzugsweise dann, wenn diese das wenigstens eine Bewertungskriterium gleich erfüllen.

9. Das Verfahren (100) nach einem der vorhergehenden Ansprüche, wobei das Verfahren (100) die weiteren nachfolgenden Schritte umfasst:
Prüfen einer Vollständigkeit und/oder einer Eignung der wenigstens einen ermittelten Installationsinformation, insbesondere der eCAD- und mCAD-Daten, für das Simulieren (102) der mindestens einen dezentralen, elektrischen Topologie; und
Festlegen einer Simulationsstrategie für das Simulieren (102) der mindestens einen dezentralen, elektrischen Topologie in Abhängigkeit von einem Ergebnis des Prüfens, wobei das Simulieren (102) dann durchgeführt wird, wenn das Prüfen ergibt, dass die wenigstens eine ermittelte Installationsinformation vollständig und/oder geeignet, insbesondere qualitativ ausreichend, ist, wobei vorzugsweise das Simulieren (102) auch dann durchgeführt wird, wenn das Prüfen ergibt, dass mCAD-Daten in der wenigstens einen ermittelten Installationsinformation fehlen, wobei bevorzugt andernfalls eine Benutzereingabe zur Eingabe fehlender Installationsinformationen initiiert wird.

10. Das Verfahren (100) nach Anspruch 9, wobei in dem Fall, dass das Prüfen ergibt, dass ein Teil der wenigstens einen ermittelten Installationsinformation, vorzugsweise die eCAD-Daten, nicht vollständig und/oder qualitativ nicht ausreichend ist, eine Benutzereingabe zur Eingabe des Teils, insbesondere der eCAD-Daten, initiiert wird, um die wenigstens eine ermittelte Installationsinformation in der Art mit dem Teil, insbesondere der eCAD-Daten, anzureichern, dass das Simulieren (102) zur Erstellung der mindestens einen dezentralen, elektrischen Topologie ermöglicht wird.

11. Das Verfahren (100) nach Anspruch 9 oder 10, wobei wenigstens ein Teil der wenigstens einen ermittelten Installationsinformation aus historischen Daten generiert wird, insbesondere in dem Fall, dass das Prüfen ergibt, dass mCAD-Daten in der wenigstens einen ermittelten Installationsinformation fehlen.

12. Das Verfahren (100) nach einem der vorhergehenden Ansprüche, wobei die Ausgabe wenigstens eine der folgenden Angaben umfasst:
eine Angabe zu einer Verkabelung der elektrischen Topologie;
eine Stückliste für die Komponenten der Maschine (1);
eine generierte Betriebsmittelkennzeichnung für eine optimierte dezentrale, elektrische Topologie;
eine Angabe zu Verbindungen der Komponenten miteinander;
eine Installationsanleitung hinsichtlich einer Reihenfolge der Verbindung der Komponenten miteinander;
eine Installationsunterstützung eines Werkes bei der Installation der Maschine (1), vorzugsweise durch wenigstens eine Installationsanweisung; und
einen elektrischer Anschluss- und/oder Schaltplan.

13. Ein System für eine computer-gestützte Erstellung einer dezentralen, elektrischen Topologie für eine Maschine (1), insbesondere einer Anlage (1), basierend auf einer Installationsvorgabe (200), umfassend:
eine Ermittlungsvorrichtung (210), insbesondere eine Eingabevorrichtung und/oder eine Kamera und/oder ein Datenspeicher, für das Ermitteln, insbesondere Einlesen oder Eingeben, von wenigstens einer Installationsinformation der Installationsvorgabe (200), insbesondere von mCAD- und/oder eCAD-Daten;
eine Vorrichtung (30) zur Datenverarbeitung, umfassend Mittel zur Ausführung der Schritte des Verfahrens (100) nach einem der vorhergehenden Ansprüche.

14. Ein Computerprogramm (20), umfassend Befehle, die bei der Ausführung des Computerprogramms (20) durch einen Computer (30) diesen veranlassen, die Schritte des Verfahrens (100) nach einem der Ansprüche 1 bis 12 auszuführen.

15. Eine Vorrichtung (30) zur Datenverarbeitung, umfassend Mittel zur Ausführung der Schritte des Verfahrens (100) nach einem der Ansprüche 1 bis 12.
